# EUROPÄISCHE PATENTSCHRIFT

(11) **EP 3 303 647 B1**
(45) Veröffentlichungstag und Bekanntmachung des Hinweises auf die Patenterteilung: **20.03.2019**
(21) Anmeldenummer: 16729811.6
(22) Anmeldetag: 31.05.2016
(51) Int. Cl.: C22C 38/04, C22C 38/08, C21D 8/04, C23C 2/06

(54) **UMFORMGEHÄRTETES BAUTEIL AUS VERZINKTEM STAHL, HERSTELLVERFAHREN HIERZU UND VERFAHREN ZUR HERSTELLUNG EINES STAHLBANDES GEEIGNET ZUR UMFORMHÄRTUNG VON BAUTEILEN**
DEFORMATION-HARDENED COMPONENT MADE OF GALVANIZED STEEL, PRODUCTION METHOD THEREFOR AND METHOD FOR PRODUCING A STEEL STRIP SUITABLE FOR THE DEFORMATION-HARDENING OF COMPONENTS
COMPOSANT FORMÉ À CHAUD EN ACIER GALVANISÉ, PROCÉDÉ DE FABRICATION DE CELUI-CI ET PROCÉDÉ DE FABRICATION D'UNE BANDE D'ACIER APPROPRIÉE AU FORMAGE À CHAUD DE COMPOSANTS

(30) Priorität: 03.06.2015 DE 102015108830; 24.06.2015 DE 102015110164
(43) Veröffentlichungstag der Anmeldung: 11.04.2018
(73) Patentinhaber: Salzgitter Flachstahl GmbH, 38239 Salzgitter (DE)
(72) Erfinder: BRAUN, Michael, 38165 Lehre (DE); LUTHER, Friedrich, 30989 Gehrden (DE); MAIKRANZ-VALENTIN, Manuel, 34225 Baunatal (DE)
(74) Vertreter: Moser Götze & Partner Patentanwälte mbB
(86) Internationale Anmeldenummer: PCT/EP2016/062284
(87) Internationale Veröffentlichungsnummer: WO 2016/193268

(56) Entgegenhaltungen:
- EP-A1- 1 806 421
- EP-A1- 1 865 086
- JP-A- 2002 088 447
- JP-A- 2006 152 427
- JP-A- 2007 332 457
- US-A1- 2007 006 948

## Beschreibung

Die Erfindung betrifft ein umformgehärtetes Bauteil aus verzinktem Stahl, ein Verfahren zur Erzeugung eines Stahlbandes geeignet zur Umformhärtung von Bauteilen und ein Verfahren zur Herstellung eines umformgehärteten Bauteils aus diesem Stahlband.

Im Folgenden soll unter dem Begriff der Umformhärtung insbesondere neben der bekannten Presshärtung von Blechen auch die Warmumformung und Härtung von Rohren, insbesondere die Innenhochdruckumformung und die Biegeumformung mit und ohne entsprechenden Umformwerkzeugen, verstanden werden.

Es ist bekannt, dass warmumgeformte insbesondere pressgehärtete Stahlbleche im Automobilbau immer häufiger Verwendung finden. Durch den Prozess des Presshärtens können hochfeste Bauteile erzeugt werden, die vorwiegend im Karosseriebereich eingesetzt werden. Das Presshärten kann grundsätzlich mittels zweier verschiedener Verfahrensvarianten durchgeführt werden, nämlich mittels eines direkten oder indirekten Verfahrens. Hierbei werden zunächst aus einem Stahlband oder Stahlblech Platinen zugeschnitten, die anschließend zu einem Bauteil weiterverarbeitet werden.

Beim direkten Verfahren wird eine Stahlblechplatine über die sogenannte Austenitisierungstemperatur aufgeheizt, anschließend wird die so erhitzte Platine in ein Formwerkzeug überführt und in einem einstufigen Umformschritt zum fertigen Bauteil umgeformt und gleichzeitig durch das gekühlte Formwerkzeug mit einer Geschwindigkeit, die über der kritischen Härtegeschwindigkeit des Stahls liegt, abgekühlt, so dass ein gehärtetes Bauteil erzeugt wird.

Beim indirekten Verfahren wird zunächst in einem Umformprozess die Platine zu einem endabmessungsnahen Bauteil umgeformt und beschnitten. Dieses Bauteil wird anschließend auf eine Temperatur über der Austenitisierungstemperatur erhitzt und in ein Formwerkzeug überführt und eingelegt, welches die Endabmessungen besitzt. Nach dem Schließen des gekühlten Werkzeuges wird das vorgeformte Bauteil in diesem Werkzeug mit einer Geschwindigkeit über der kritischen Härtegeschwindigkeit abgekühlt und dadurch gehärtet.

Bekannte warmumformbare Stähle für diesen Einsatzbereich sind zum Beispiel der Mangan-Bor-Stahl "22MnB5" und neuerdings auch luftvergütbare Stähle gemäß der Offenlegungsschrift DE 10 2010 024 664 A1.

Neben unbeschichteten Stahlblechen werden von der Automobilindustrie für das Presshärten vermehrt auch Stahlbleche mit einem Verzunderungsschutz gefordert und eingesetzt, der gleichzeitig einen Korrosionsschutz beim späteren Einsatz des Bauteils bietet. Die Vorteile liegen neben der erhöhten Korrosionsbeständigkeit des fertigen Bauteils darin, dass die Platinen oder Bauteile im Ofen nicht verzundern, wodurch der Verschleiß der Pressenwerkzeuge durch abgeplatzten Zunder reduziert wird.

Zum Einsatz beim Presshärten kommen derzeit durch Schmelztauchen aufgebrachte Beschichtungen aus Aluminium-Silizium (AS), Zink-Aluminium (Z), Zink-Aluminium-Eisen (ZF/ Galvannealed), Zink-Magnesium-Aluminium-Eisen (ZM) sowie elektrolytisch abgeschiedene Beschichtungen aus Zink oder Zink-Nickel, die vor der Warmumformung in eine Eisen-Zink-Legierungsschicht umgewandelt werden können. Diese Korrosionsschutzbeschichtungen werden üblicherweise in kontinuierlichen Durchlaufverfahren auf das Warm- oder Kaltband aufgebracht.

Der Vorteil von zinkbasierten Korrosionsschutzbeschichtungen liegt darin, dass diese nicht nur eine Barrierewirkung wie die aluminiumbasierten Beschichtungen aufweisen, sondern zusätzlich einen aktiven kathodischen Korrosionsschutz für das Bauteil bieten können.

Das Presshärten von Stahlblechplatinen mit zinkbasierten Beschichtungen ist aus der DE 601 19 826 T2 bekannt. Hier wird eine zuvor oberhalb der Austenitisierungstemperatur auf 800 - 1200 °C erwärmte und ggf. mit einer metallischen Beschichtung aus Zink oder auf Basis von Zink versehene Blechplatine in einem fallweise gekühlten Werkzeug durch Warmumformung zu einem Bauteil umgeformt, wobei während des Umformens durch schnellen Wärmeentzug das Blech bzw. Bauteil im Umformwerkzeug eine Abschreckhärtung (Presshärtung) erfährt und durch das entstehende martensitische Härtegefüge die geforderten Festigkeitseigenschaften erreicht.

Zinkbasierte Systeme haben allerdings auch einen Nachteil. So ist insbesondere beim direkten Presshärten von zinkbasierten Korrosionsschutzbeschichtungen bekannt, dass während des Umformschritts im oberflächennahen Bereich Makrorisse (>100 µm) im Stahl auftreten können, die teilweise sogar durch den Blechquerschnitt reichen. Aus der Literatur ist bekannt, dass auch kleinere Mikrorisse (10 µm bis 100 µm) bereits die Dauerfestigkeit des Bauteils senken und dadurch deren Einsatz verhindern können. Unterhalb von 10 µm werden Mikrorisse allgemein als unschädlich angesehen.

Die Ursache für das Auftreten von Makrorissen ist eine flüssigmetallinduzierte Spannungsrisskorrosion, die auch als Flüssigmetallversprödung, Liquid Metal Assisted Cracking (LMAC) oder Liquid Metal Embrittlement (LME) bezeichnet wird. Hierbei werden die Austenitkorngrenzen des Stahls durch flüssige Zinkphasen infiltriert und geschwächt, was insbesondere in Bereichen mit hohen Spannungen bzw. Umformgraden zu tiefen Rissen führen kann.

Eine Möglichkeit dies zu vermeiden, ist das in der Patentschrift DE10 2010 056 265 B3 beschriebene Verfahren zum Herstellen eines gehärteten Stahlbauteiles mit einer Beschichtung aus Zink oder einer Zinklegierung, wobei die Platine abhängig von der Dicke der Zinkschicht oder der Dicke der Zinklegierungsschicht vor dem Umformen so lange auf einer Temperatur von über 782°C gehalten wird, dass sich zwischen dem Stahl und der Beschichtung aus Zink oder einer Zinklegierung eine Sperrschicht aus Zinkferrit ausbildet und die sich ausbildende Zinkferritschicht flüssiges Zink aufnimmt und so dick ausgebildet wird, dass beim Umformen keine flüssigen Zinkphasen mit dem Stahl reagieren.

Unter Zinkferrit wird hier ein Eisen-Zink-Mischkristall verstanden, in dem die Zinkatome substitutionell gelöst im Eisenkristallgitter vorliegen. Durch den geringen Zinkgehalt liegt der Schmelzpunkt des Zinkferrits oberhalb der Umformtemperatur.

Eine weitere Möglichkeit ist das in der Patentschrift EP 2 414 562 B1 beschriebene Verfahren zum Herstellen eines gehärteten Stahlbauteils, wobei auf dem Stahlflachprodukt eine einphasige aus [gamma-]ZnNi-Phase bestehende Zink-Nickel-Legierungsschicht elektrolytisch abgeschieden wird, welche neben Zink und unvermeidbaren Verunreinigungen 7 bis 15 Gew.% Nickel enthält, eine aus dem Stahlflachprodukt gebildete Platine auf eine mindestens 800°C betragende Platinentemperatur erwärmt wird und anschließend in einem Formwerkzeug geformt und mit einer zur Ausbildung des Vergütungs- oder Härtegefüges ausreichenden Geschwindigkeit abgekühlt wird.

Durch den Nickelgehalt wird der Schmelzpunkt der Legierungsschicht derart erhöht, dass bei der Warmumformung keine flüssige Zinkphase und somit keine Flüssigmetallversprödung auftreten kann. Allerdings hat das Verfahren den Nachteil, dass einige Verarbeiter/Kunden davon Abstand nehmen. Begründet wird dies durch die Absicht weitestgehend nickelfreie Prozesse und Produkte zu betreiben.

Daneben kann es bei der Presshärtung in Zonen mit ungünstigen Belastungszuständen wie zum Beispiel im Zargenbereich von Bauteilen zu Mikrorissen kommen, die ausgehend von der Zinkbeschichtung tief in das Substrat laufen und bei größeren Risstiefen die Dauerfestigkeit des Bauteils beeinträchtigen können. Mikrorisse können dabei auch ohne das Vorhandensein von flüssigen Zinkphasen entstehen. Hierbei wird die Rissspitze durch eindiffundierende Zinkatome geschwächt.

Eine Möglichkeit zur Vermeidung von Mikrorissen > 10µm ist der Einsatz des indirekten Presshärtens bei zinkbasierten Beschichtungen, da hier der eigentliche Umformschritt vor der Härtung bei Umgebungstemperaturen durchgeführt wird. Zwar können bei der Härtung und Restformgebung im Werkzeug ebenfalls Risse auftreten, deren Tiefe ist jedoch im Vergleich zu den Rissen bei der direkten Prozessierung deutlich geringer.

Das indirekte Verfahren ist jedoch erheblich aufwendiger, da zum einen ein zusätzlicher Arbeitsschritt nötig ist (Kaltumformung) und zum anderen spezielle Öfen zur Erwärmung verwendet werden müssen, in denen Bauteile statt Platinen vor der Härtung erwärmt werden können.

Schließlich wird in der Patentschrift DE 10 2013 100 682 B3 ein Verfahren zur Vermeidung von Mikrorissen beschrieben, bei dem die erwärmte Platine vor dem Presshärten einem Zwischenkühlschritt unterzogen wird. Dieses Verfahren ist sehr aufwändig, da ein zusätzlicher Fertigungsschritt in den Herstellprozess implementiert werden muss.

Des Weiteren sind aus den Offenlegungsschriften WO 2012 028 224 A1, WO 2010 069 588 A1, WO 2005 021 821 A1, JP 2002 088 447 und DE 102 46 614 A1 bereits verzinkte Stähle zur Herstellung pressgehärteter Bauteile bekannt. In der Offenlegungsschrift JP 2006 152 427 A sind weitere Stähle zur Herstellung hochfester pressgehärteter Bauteile beschrieben, deren Gefüge nach dem Presshärten überwiegend aus Martensit mit einer Korngröße der ehemaligen Austenitkörner von weniger als10 µm besteht. Ferner ist aus der Offenlegungsschrift WO 2009 082 091 A1 ein warmgewalztes Stahlblech mit ausgezeichneten Warmumformeigenschaften und hoher Festigkeit bekannt. Den Legierungselementen Nb, Ti und V wird neben einer Verbesserung der Zähigkeit auch eine kornfeinende Wirkung zugesprochen.

Aufgabe der Erfindung ist es, ein umformgehärtetes Bauteil aus verzinktem Stahl anzugeben, welches kostengünstig in der Herstellung ist, und bei dem Mikrorisse > 10µm nach der Umformhärtung weitestgehend vermieden werden. Des Weiteren sollen ein Verfahren zur Erzeugung eines Stahlbandes geeignet zur Umformhärtung von Bauteilen und ein Verfahren zur Herstellung eines umformgehärteten Bauteils aus diesem Stahlband bereitgestellt werden.

Nach der Lehre der Erfindung wird diese Aufgabe durch ein umformgehärtetes Bauteil aus verzinktem Stahl gelöst, bei dem zunächst aus einem mit Zink oder mit einer Legierung auf Basis von Zink beschichteten Stahlband oder Stahlblech eine Platine zugeschnitten, anschließend auf eine Umformtemperatur oberhalb Ac3 erwärmt und umgeformt und dabei gehärtet wird, aufweisend ein zumindest teilmartensitisches Umwandlungsgefüge nach der Formgebung, wobei der Stahl folgende chemische Zusammensetzung in Gew.-%
C: 0,10 - 0,50
Si: 0,01 - 0,50
Mn: 0,50 - 2,50
P<0,02
S<0,01
N<0,01
Al: 0,015 - 0,100
B<0,004 Rest Eisen, einschließlich unvermeidbarer erschmelzungsbedingter, stahlbegleitender Elemente, mit mindestens einem Element aus der Gruppe Nb, V, Ti, wobei die Summe der Gehalte Nb+V+Ti in einem Bereich von 0,01 bis 0,20 Gew.-% liegt und wobei das Gefüge des Stahls nach der Umformhärtung eine mittlere Korngröße der ehemaligen Austenitkörner von weniger als15µm aufweist.

Überraschend hat sich bei Versuchen gezeigt, dass durch die Verwendung von Platinen mit der angegebenen Legierungszusammensetzung in Kombination mit der Einstellung eines sehr feinkörnigen Gefüges, Mikrorisse bei der Umformhärtung drastisch reduziert oder sogar verhindert werden konnten. Hierbei spielt die Zugabe von Mikrolegierungselementen aus der Gruppe Niob, Titan und Vanadium in den angegebenen Gehalten sowie die dadurch ermöglichte gezielte Einstellung eines sehr feinkörnigen Gefüges im Zuge der Herstellung des Stahlbandes eine entscheidende Rolle. Wird ein Gefüge mit einer Korngröße der ehemaligen Austenitkörner von kleiner als 15 µm eingestellt, sinkt die Neigung zur Mikrorissbildung drastisch. Noch deutlicher wird das Ergebnis, wenn Korngrößen von kleiner 12 µm oder kleiner 9 µm eingestellt werden.

Vermutlich wird durch die Einstellung eines sehr feinkörnigen Gefüges die Risseinleitung und der Rissfortschritt behindert bzw. deutlich reduziert. Darüber hinaus wird durch die Zugabe von Niob, Vanadium oder Titan die Korngrenzenkohäsion der Austenitkörner erhöht, was vermutlich ebenfalls einen positiven Effekt auf die Vermeidung der Rissbildung beim Umformhärten hat.

In einer bevorzugten Legierungszusammensetzung weist der Stahl einen C-Gehalt von 0,20 bis 0,40 Gew.-%, einen Si-Gehalt von 0,15 bis 0,25 Gew.-%, einen Al-Gehalt von 0,015 bis 0,04 Gew.-% auf, wobei die Summe der Gehalte Nb+V+Ti in einem Bereich von 0,03 bis 0,15 Gew.-% liegt.

Um die gewünschten Effekte im Hinblick auf ein möglichst feinkörniges Gefüge zu erreichen, weist der Stahl einen Nb-Gehalt von größer als 0,03 bis kleiner gleich 0,08 Gew.-% und/oder einen V-Gehalt von 0,03% bis 0,08 Gew.-% und/oder einen Ti-Gehalt von größer als 0,09 bis kleiner gleich 0,2 Gew.-% auf.

Verfahrenstechnisch wird die Erfindung zur Erzeugung eines Stahlbandes geeignet zur Umformhärtung von Bauteilen durch folgende Schritte realisiert:
- Erschmelzen eines Stahls mit folgender chemischer Zusammensetzung in Gew.-%
   C: 0,10 - 0,50
   Si: 0,01 - 0,50
   Mn: 0,50 - 2,50
   P<0,02
   S<0,01
   N<0,01
   Al: 0,015 - 0,100
   B<0,004
   Rest Eisen, einschließlich unvermeidbarer erschmelzungsbedingter, stahlbegleitender Elemente, mit mindestens einem Element aus der Gruppe Nb, V, Ti, wobei die Summe der Gehalte Nb+V+Ti in einem Bereich von 0,01 bis 0,20 Gew.-% liegt,
- Vergießen des Stahls im Stranggießverfahren zu einzelnen Brammen mit anschließender Abkühlung an ruhender Luft,
- Wiedererwärmen der Brammen auf eine Temperatur im Bereich von 1200°C bis 1280°C - Die Haltezeit über 1200°C muss dabei min. 30 min betragen, -
- Warmwalzen der wiedererwärmten Brammen mit einer Walzendtemperatur im Bereich von 780C bis 920C,
- Aufwickeln des Warmbandes bei einer Haspeltemperatur im Bereich von 630°C bis 750°C,
- Optionales Kaltwalzen des Warmbandes mit anschließender optionaler Rekristallisationsglühung,
- Beschichten des warm- oder kaltgewalzten Bandes mit Zink oder einer Legierung auf Basis von Zink,
- Optionale Wärmebehandlung zur Überführung der Zink- oder Zinklegierungsbeschichtung in eine Zink-Eisen-Legierungsschicht.

Erfindungsgemäß wurde erkannt, dass die karbidbildenden Mikrolegierungselemente, wie beispielsweise Niobcarbid, eine ausreichende Auflösung aus dem vorangegangenen Stranggießprozess erfahren müssen, um im Zuge des Warmwalzens feine Ausscheidungen auf den Austenitkorngrenzen zu bilden, die dann maßgebend zur Keimbildung bei der Phasenumwandlung und Behinderung der Kornvergröberung bei hohen Temperaturen und damit für die Feinkörnigkeit und die Rissbeständigkeit im späteren umformgehärteten Bauteil sind.

Erfindungsgemäß erfolgt daher eine Wiedererwärmung der Bramme auf eine Temperatur im Bereich von 1200°C bis 1280°C . Die Haltezeit über 1200°C muss dabei mindestens 30 min betragen.

Zudem wird die Endwalztemperatur erfindungsgemäß gegenüber üblichen Temperaturen auf Werte in einem Bereich von 780°C bis 920°C herabgesetzt, um eine hohe Versetzungsdichte am Ende des Warmwalzprozesses zu erzielen. Dies führt bei der anschließenden Abkühlung des Warmbandes zu einer hohen Keimdichte für die Phasenumwandlung und damit zu dem angestrebten sehr feinen Korn.

Erfindungsgemäß wird das Warmband anschließend bei einer Haspeltemperatur im Bereich von 630°C bis 750°C zu einem Coil aufgewickelt. Dieser Temperaturbereich wurde erfindungsgemäß festgelegt, da erkannt wurde, dass in diesem Temperaturbereich der Ausscheidungsdruck für die Ausscheidungen am größten ist

Das so erzeugte Warmband kann anschließend verzinkt und direkt weiter zu einem Bauteil verarbeitet werden oder es wird ein Kaltwalzschritt der Verzinkung vorgeschaltet, um entsprechend dünne Bänder von beispielsweise unter 1,5 mm Dicke zu erzeugen. Falls das Warmband einem Kaltwalzschritt unterzogen wurde, kann das kaltgewalzte Band anschließend optional einer Rekristallisationsglühung unterzogen werden. Dies kann in einer Haubenglühe oder in einer Durchlaufglühanlage erfolgen, wobei die Durchlaufglühung auch im Zuge einer Schmelztauchverzinkung erfolgen kann.

Als Beschichtungsverfahren kommt sowohl das Schmelztauchen, als auch das elektrolytische Verzinken in Betracht. Die Beschichtung basiert auf Zink als Hauptbestandteil, wobei aber auch beispielsweise Aluminium, Magnesium, Nickel und Eisen einzeln oder in Kombination hierin enthalten sein können. Auch sind kombinierte Beschichtungen aus elektrolytischer Abscheidung von beispielsweise Nickel, Eisen oder Zink und einer nachfolgenden Glühung und Schmelztauchveredlung möglich. Weiter ist es möglich, eine dünne Beschichtung durch Abscheidung aus der Gasphase zu erzeugen und nachfolgend das Band elektrolytisch oder durch Schmelztauchen mit einer Beschichtung aus Zink oder einer Zinklegierung zu veredeln. Darüber hinaus ist es möglich, die erzeugten Schichten durch eine geeignete Glühbehandlung in Zink-Eisen Legierungsschichten zu überführen, um beispielsweise beim Umformhärten kürzere Ofenzeiten oder eine induktive Schnellerwärmung zu ermöglichen. Dies kann entweder unmittelbar nach dem Schmelztauchprozess erfolgen (Galvannealing) oder aber in einem separatem Prozessschritt erfolgen in Form einer Hauben- oder Durchlaufglühung.

Das so erzeugte umformgehärtete Bauteil weist eine außerordentlich gute Umformbarkeit auf, wobei in einem Biegeversuch ermittelte Biegewinkel von über 60° und sogar bis über 80° möglich sind, insbesondere, wenn das walzharte Kaltband vor der Verzinkung einer rekristallisierenden Haubenglühung in einem Temperaturbereich von 650°C bis 700°C und einer Haltezeit von 24 bis 72 Stunden unterzogen wurde.

Die Dicke der Beschichtung kann je nach Anforderung an den Korrosionsschutz zwischen 5 µm und 25 µm betragen, wobei auch größere Dicken möglich sind.

Auch können aus dem nach dem vorbeschriebenen Verfahren hergestellten Stahlband verschweißte Rohre hergestellt werden, die dann jeweils zu einem Bauteil umformgehärtet werden. Die Umformhärtung kann zum Beispiel im Zuge eines Biegeprozesses oder durch Innenhochdruckumformung erfolgen.

Die Rohre können als geschweißte Rohre vorliegen oder das Stahlband wird zu einem Schlitzrohr umgeformt, welches dann entlang seiner Bandkanten verschweißt wird, wobei als Schweißverfahren zur Herstellung geschweißter Rohre zum Beispiel Hochfrequenz-Induktionsschweißen (HFI) oder Laserschweißen in Frage kommen.

## Patentansprüche

1. Umformgehärtetes Bauteil aus verzinktem Stahl, bei dem zunächst aus einem mit Zink oder einer Legierung auf Basis von Zink beschichteten Stahlband oder Stahlblech eine Platine zugeschnitten, anschließend auf eine Umformtemperatur oberhalb Ac3 erwärmt und umgeformt und dabei gehärtet wird, aufweisend ein zumindest teilmartensitisches Umwandlungsgefüge nach der Formgebung, wobei der Stahl folgende chemische Zusammensetzung in Gew.-%
C: 0,10 - 0,50
Si: 0,01 - 0,50
Mn: 0,50 - 2,50
P<0,02
S<0,01
N<0,01
Al: 0,015 - 0,100
B<0,004
Rest Eisen, einschließlich unvermeidbarer erschmelzungsbedingter, stahlbegleitender Elemente, mit mindestens einem Element aus der Gruppe Nb, V, Ti, wobei die Summe der Gehalte Nb+V+Ti in einem Bereich von 0,01 bis 0,20 Gew.-% liegt, wobei das Gefüge des Stahls nach der Umformhärtung eine mittlere Korngröße der ehemaligen Austenitkörner von <15 µm aufweist.

2. Umformgehärtetes Bauteil nach Anspruch 1, **dadurch gekennzeichnet, dass** der Stahl einen C-Gehalt von 0,20 bis 0,40 Gew.-%, einen Si-Gehalt von 0,15 bis 0,25 Gew.-%, einen Al-Gehalt von 0,015 bis 0,04 Gew.-% aufweist, wobei die Summe der Gehalte Nb+V+Ti in einem Bereich von 0,03 bis 0,15 Gew.-% liegt.

3. Umformgehärtetes Bauteil nach Anspruch 1 und 2, **dadurch gekennzeichnet, dass** der Stahl einen Nb-Gehalt von größer als 0,03 bis kleiner gleich 0,08 Gew.-% und/oder einen V-Gehalt von 0,03 bis 0,08 Gew.% und/oder einen Ti-Gehalt von größer als 0,09 bis kleiner gleich 0,2 Gew.-% aufweist.

4. Umformgehärtetes Bauteil nach den Ansprüchen 1 bis 3, **dadurch gekennzeichnet, dass** das Gefüge des Stahls nach der Umformhärtung eine mittlere Korngröße der ehemaligen Austenitkörner von <12 µm aufweist.

5. Umformgehärtetes Bauteil nach den Ansprüchen 1 bis 4, **dadurch gekennzeichnet, dass** das Gefüge des Stahls nach der Umformgehärtung eine mittlere Korngröße der ehemaligen Austenitkörner von <9 µm aufweist.

6. Umformgehärtetes Bauteil nach einem der Ansprüche 1 bis 5, **dadurch gekennzeichnet, dass** das umformgehärtete Bauteil einen Biegewinkel von mindestens 60° aufweist.

7. Verfahren zur Erzeugung eines Stahlbandes geeignet zur Umformhärtung von Bauteilen nach den Ansprüchen 1 bis 6, **gekennzeichnet durch** die Schritte:
- Erschmelzen eines Stahls mit folgender chemischen Zusammensetzung in Gew.-%
C: 0,10 - 0,50
Si: 0,01 - 0,50
Mn: 0,50 - 2,50
P<0,02
S<0,01
N<0,01
Al: 0,015 - 0,100
B<0,004
Rest Eisen, einschließlich unvermeidbarer erschmelzungsbedingter, stahlbegleitender Elemente, mit mindestens einem Element aus der Gruppe Nb, V, Ti, wobei die Summe der Gehalte Nb+V+Ti in einem Bereich von 0,01 bis 0,20 Gew.-% liegt,
- Vergießen des Stahls im Stranggießverfahren zu einzelnen Brammen mit anschließender Abkühlung an ruhender Luft,
- Wiedererwärmen der Brammen auf eine Temperatur im Bereich von 1200°C bis 1280°C, - Warmwalzen der wiedererwärmten Brammen mit einer Walzendtemperatur im Bereich von 780°C bis 920°C,
- Aufwickeln des Warmbandes bei einer Temperatur im Bereich von 630°C bis 750°C,
- Optionales Kaltwalzen des Warmbandes mit anschließender optionaler Rekristallisationsglühung,
- Beschichten des warm- oder kaltgewalzten Bandes mit Zink oder einer Legierung auf Basis von Zink,
- Optionale Wärmebehandlung zur Überführung der Zink- oder Zinklegierungsbeschichtung in eine Zink-Eisen-Legierungsschicht.

8. Verfahren nach Anspruch 7, **dadurch gekennzeichnet, dass** der zu erschmelzende Stahl einen C-Gehalt von 0,20 bis 0,40 Gew.-%, einen Si-Gehalt von 0,15 bis 0,25 Gew.-%, einen Al-Gehalt von 0,015 bis 0,04 Gew.-% aufweist, wobei die Summe der Gehalte Nb+V+Ti in einem Bereich von 0,03 bis 0,15 Gew.-% liegt.

9. Verfahren zur Herstellung eines umformgehärteten Bauteils aus einem nach den Ansprüchen 7 oder 8 hergestellten Stahlbandes, **dadurch gekennzeichnet, dass** das Stahlband zu einem Schlitzrohr umgeformt wird, das Schlitzrohr entlang seiner Bandkanten verschweißt wird und das geschweißte Rohr zu einem Bauteil umformgehärtet wird.

10. Verfahren nach Anspruch 9, **dadurch gekennzeichnet, dass** das Schlitzrohr mittels Hochfrequenz-Induktionsschweißen (HFI) oder Laserschweißen verschweißt wird.

11. Verfahren nach Anspruch 9 und 10, **dadurch gekennzeichnet, dass** im Zuge der Umformhärtung das geschweißte Rohr zu einem Bauteil warm umgeformt und dabei gehärtet wird.

12. Verfahren nach Anspruch 11, **dadurch gekennzeichnet, dass** das Warmumformen eine Biege- oder Innenhochdruckumformung ist.

## Claims

1. Deformation-hardened component made of galvanized steel, in which firstly a plate is cut from a steel strip or steel sheet coated with zinc or with a zinc-based alloy, then the plate is heated to a deformation temperature above Ac3 and deformed and thus hardened, comprising an at least partially martensitic transformation structure after forming, wherein the steel has the following chemical composition in wt.%
C: 0.10-0.50
Si: 0.01-0.50
Mn: 0.50-2.50
P<0.02
S<0.01
N<0.01
Al: 0.015-0.100
B<0.004
remainder iron, including unavoidable smelting-induced, steel-accompanying elements, having at least one element from the group Nb, V, Ti, wherein the total of the contents of Nb+V+Ti is in a range of 0.01 to 0.20 wt.%, wherein the structure of the steel after deformation-hardening comprises an average grain size of the former austenite grains of <15 µm.

2. Deformation-hardened component as claimed in claim 1, **characterised in that** the steel has a C content of 0.20 to 0.40 wt.%, an Si content of 0.15 to 0.25 wt.%, an Al content of 0.015 to 0.04 wt.%, wherein the total of the contents of Nb+V+Ti is in a range of 0.03 to 0.15 wt.%.

3. Deformation-hardened component as claimed in claims 1 and 2, **characterised in that** the steel has an Nb content of greater than 0.03 to less than or equal to 0.08 wt.% and/or a V content of 0.03 to 0.08 wt.% and/or a Ti content of greater than 0.09 to less than or equal to 0.2 wt.%.

4. Deformation-hardened component as claimed in claims 1 to 3, **characterised in that** the structure of the steel after deformation-hardening has an average grain size of the former austenite grains of <12 µm.

5. Deformation-hardened component as claimed in claims 1 to 4, **characterised in that** the structure of the steel after deformation-hardening has an average grain size of the former austenite grains of <9 µm.

6. Deformation-hardened component as claimed in any one of claims 1 to 5, **characterised in that** the deformation-hardened component has a bending angle of at least 60°.

7. Method for producing a steel strip suitable for deformation-hardening of components, in particular as claimed in claims 1 to 6, **characterised by** the following steps:
- smelting of a steel with the following chemical composition in wt.%
C: 0.10-0.50
Si: 0.01-0.50
Mn: 0.50-2.50
P<0.02
S<0.01
N<0.01
Al: 0.015-0.100
B<0.004
remainder iron, including unavoidable smelting-induced, steel-accompanying elements, having at least one element from the group Nb, V, Ti, wherein the sum of the contents of Nb+V+Ti is in a range of 0.01 to 0.20 wt.%,
- casting of the steel using a continuous casting method to form individual slabs with subsequent cooling in static air,
- reheating of the slabs to a temperature in the range of 1200°C to 1280°C - hot-rolling of the reheated slabs at a final rolling temperature in the range of 780°C to 920°C,
- winding of the hot strip at a temperature in the range of 630°C to 750°C,
- optional cold-rolling of the hot strip with subsequent optional recrystallisation annealing,
- coating of the hot-rolled or cold-rolled strip with zinc or a zinc-based alloy,
- optional heat treatment for the transfer of the zinc coating or zinc alloy coating into a zinc-iron alloy layer.

8. Method as claimed in claim 7, **characterised in that** the steel to be smelted has a C content of 0.20 to 0.40 wt.%, an Si content of 0.15 to 0.25 wt.%, an Al content of 0.015 to 0.04 wt.%, wherein the total of the contents of Nb+V+Ti is in a range of 0.03 to 0.15 wt.%.

9. Method for producing a deformation-hardened component from a steel strip produced as claimed in any one of claims 7 or 8, **characterised in that** the steel strip is deformed to form a slit pipe, the slit pipe is welded along its strip edges and the welded pipe is deformation-hardened to form a component.

10. Method as claimed in claim 9, **characterised in that** the slit pipe is welded by high-frequency induction welding (HFI) or laser welding.

11. Method as claimed in claim 9 and 10, **characterised in that**, during the deformation-hardening, the welded pipe is hot-deformed to form a component and is thus hardened.

12. Method as claimed in claim 11, **characterised in that** the hot-deformation is a bending or internal high pressure deformation.

## Revendications

1. Composant, durci par formage, en acier zingué, dans lequel un flan est tout d'abord découpé dans une bande d'acier ou une tôle d'acier revêtue de zinc ou d'un alliage à base de zinc, puis est chauffé à une température de formage au-dessus de Ac3, mis en forme et durci, le composant ayant une structure de transformation au moins partiellement martensitique après formage, l'acier ayant la composition chimique suivante en % en poids
C : 0,10 à 0,50
Si : 0,01 à 0,50
Mn : 0,50 à 2,50
P < 0,02
S < 0,01
N < 0,01
Al : 0,015 à 0,100
B < 0,004
le reste étant du fer, y compris des éléments inévitables liés à l'acier et dus à la fusion, avec au moins un élément du groupe Nb, V, Ti, la somme des teneurs Nb + V + Ti étant dans une gamme allant de 0,01 à 0,20 % en poids, la structure de l'acier après durcissement par formage ayant une taille de grain moyenne des anciens grains d'austénite de < 15 µm.

2. Composant durci par formage selon la revendication 1, **caractérisé en ce que** l'acier a une teneur en C de 0,20 à 0,40 % en poids, une teneur en Si de 0,15 à 0,25 % en poids, une teneur en Al de 0,015 à 0,04 % en poids, la somme des teneurs en Nb + V + Ti étant dans la gamme allant de 0,03 à 0,15 % en poids.

3. Composant durci par formage selon les revendications 1 et 2, **caractérisé en ce que** l'acier a une teneur en Nb supérieure 0,03 à inférieure ou égale à 0,08 % en poids et/ou une teneur en V de 0,03 à 0,08% en poids et/ou une teneur en Ti supérieure à 0,09 à inférieure ou égale à 0,2 % en poids.

4. Composant durci par formage selon les revendications 1 à 3, **caractérisé en ce que** la structure de l'acier après durcissement par formage a une taille de grain moyenne des anciens grains d'austénite de < 12 µm.

5. Composant durci par formage selon les revendications 1 à 4, **caractérisé en ce que** la structure de l'acier après durcissement par formage a une taille de grain moyenne des premiers grains d'austénite < 9 µm.

6. Composant durci par formage selon l'une des revendications 1 à 5, **caractérisé en ce que** le composant durci par formage présente un angle de flexion d'au moins 60°.

7. Procédé de fabrication d'une bande d'acier approprié au durcissement par formage de composants selon les revendications 1 à 6, **caractérisé par** les étapes suivantes :
- faire fondre un acier ayant la composition chimique suivante en % en poids
C : 0,10 à 0,50
Si : 0,01 à 0,50
Mn : 0,50 à 2,50
P < 0,02
S < 0,01
N < 0,01
Al : 0,015 à 0,100
B < 0,004
le reste étant du fer, y compris des éléments inévitables liés à l'acier et dus à la fusion, avec au moins un élément du groupe Nb, V, Ti, la somme des teneurs Nb + V + Ti étant dans une gamme allant de 0,01 à 0,20 % en poids,
- couler l'acier dans le processus de coulée continue pour obtenir des brames individuelles suivi d'un refroidissement ultérieur dans de l'air au repos,
- chauffer à nouveau les brames à une température dans la gamme allant de 1200°C à 1280°C,
- laminer à chaud les brames à nouveau chauffées à une température de laminage finale dans la gamme allant de 780°C et 920°C,
- enrouler la bande chaude à une température dans la gamme allant de 630°C à 750°C,
- effectuer un laminage à froid optionnel de la bande chaude puis effectuer un recuit de recristallisation optionnel,
- revêtir la bande laminée à chaud ou à froid avec du zinc ou un alliage à base de zinc,
- effectuer un traitement thermique optionnel pour transformer le revêtement de zinc ou d'alliage de zinc en une couche d'alliage de zinc-fer.

8. Procédé selon la revendication 7, **caractérisé en ce que** l'acier à fondre a une teneur en C de 0,20 à 0,40 % en poids, une teneur en Si de 0,15 à 0,25 % en poids, une teneur en Al de 0,015 à 0,04 % en poids, la somme des teneurs Nb + V + Ti étant dans la gamme allant de 0,03 à 0,15 % en poids.

9. Procédé de fabrication d'un composant durci par formage à partir d'une bande d'acier produite selon les revendications 7 ou 8, **caractérisé en ce que** la bande d'acier est mise sous la forme d'un tube fendu, le tube fendu étant soudé le long de ses bords de bande et le tube soudé étant durci par formage pour donner un composant.

10. Procédé selon la revendication 9, **caractérisé en ce que** le tube fendu est soudé par soudage par induction à haute fréquence (HFI) ou par soudage au laser.

11. Procédé selon les revendications 9 et 10, **caractérisé en ce que**, au cours du durcissement par formage, le tube soudé est thermoformé pour donner un composant durci.

12. Procédé selon la revendication 11, **caractérisé en ce que** le formage à chaud est un cintrage ou formage à haute pression interne.
